# EUROPEAN PATENT APPLICATION

(11) **EP 4 826 276 A1**
(43) Date of publication of application: **21.10.2026**
(21) Application number: 25775230.3
(22) Date of filing: 24.03.2025
(51) Int. Cl.: F16H 7/02

(54) **TRANSMISSION MECHANISM AND SUNROOF ASSEMBLY**

(30) Priority: 25.03.2024 CN 202410343227
(71) Applicant: Fuyao Glass Industry Group Co., Ltd., Fuqing, Fujian 350300 (CN)
(72) Inventor: WU, Yue, Fuzhou, Fujian 350300 (CN); YANG, Yang, Fuzhou, Fujian 350300 (CN); SHEN, Wei, Fuzhou, Fujian 350300 (CN); YU, Jianzhao, Fuzhou, Fujian 350300 (CN); LIU, Xianping, Fuzhou, Fujian 350300 (CN); CHEN, Jinfeng, Fuzhou, Fujian 350300 (CN)
(74) Representative: Mewburn Ellis LLP
(86) International application number: PCT/CN2025/084312
(87) International publication number: WO 2025/201233

(57) **Abstract**

The present disclosure relates to a transmission mechanism and a sunroof assembly. The transmission mechanism includes a transmission wheel, a synchronous belt, a guide rail, a first fixing seat, and a second fixing seat. The first fixing seat is rotatably mounted with a first pulley and defines an accommodating groove configured to movably accommodate a first pulley in a first direction. The transmission mechanism has advantages as follows. By defining the accommodating groove, the first pulley can be easily assembled and disassembled, thereby facilitating adjustment of a tension of the synchronous belt, improving transmission precision, and further improving operation stability of a curtain fabric. By providing a connector on the first pulley and defining a fitting portion including a mounting slot and a clamping portion communicated with each other on the first fixing seat, assembly and disassembly convenience of the first pulley is further improved. An anti-detachment portion is provided to keep the first pulley stable during rotation and prevent the first pulley from falling off. A flexible shaft transmission in the related art is replaced with synchronous belt transmission to achieve a noise reduction effect. Meanwhile, the number of components is reduced, and the production cost is lowered.

## Description

### CROSS-REFERENCE TO RELATED APPLICATION(S)

This application claims priority of Chinese patent application with the application number 202410343227.X and entitled "Transmission Mechanism and Sunroof Assembly" filed with the China National Intellectual Property Administration on March 25, 2024, the entire disclosure of which is hereby incorporated by reference.

### TECHNICAL FIELD

This disclosure relates to the technical field of vehicles, and in particular, to a transmission mechanism and a sunroof assembly.

### BACKGROUND

At present, it is very common to install sunroofs on automobiles during manufacturing. When the sunroof is not in use, a sunshade curtain is required to shield the sunroof to prevent direct sunlight from entering the car, which would otherwise cause the temperature inside the car to rise and affect a riding experience. Mainstream driving types of sunshade curtains include electric sunshade curtains and manual sunshade curtains. Most commercially available electric sunshade curtains adopt an indirect driving mode, in which a motor drives a flexible shaft, and the flexible shaft drives a pull rod of the sunshade curtain to drive the sunshade curtain.

The flexible shaft driving mode results in a complicated overall structure of the sunshade curtain assembly, and causes friction of the flexible shaft in the hose and guide rail to generate noise. To avoid problems such as noise, a direct-drive sunshade curtain structure has been developed at present. In this structure, a motor drives a synchronous belt to directly control opening and closing of the sunshade curtain, with lower noise and simpler assembly.

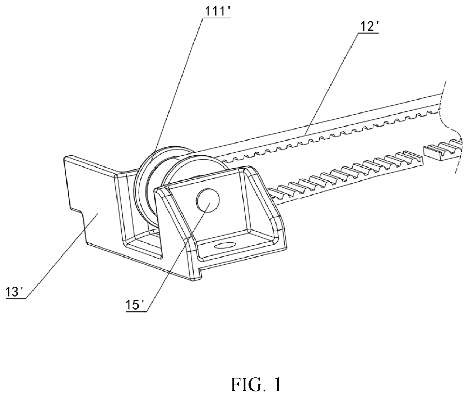

For a direct-drive sunshade curtain, an installation mode of its front timing pulley is illustrated in FIG. 1. Mounting holes are respectively defined in the timing pulley and a front fixing seat. After aligning the holes of the two, a bolt is inserted through the holes to limit the position of the timing pulley without affecting its rotation. This bolt-type installation mode is unable to adjust a tension of the synchronous belt conveniently, and is unable to ensure that both ends of the synchronous belt are tensioned simultaneously during installation.

### SUMMARY

An object of the present disclosure is to provide a transmission mechanism and a sunroof assembly aiming at the above problems in the related art.

To achieve the above technical objective, a technical solution adopted by the present disclosure is as follows.

A transmission mechanism includes a transmission wheel, a synchronous belt, a guide rail, a first fixing seat, and a second fixing seat. The transmission wheel includes a first pulley and a second pulley which are spaced apart from each other in a first direction. The synchronous belt is disposed between the first pulley and the second pulley, and the synchronous belt is in transmission fit with the first pulley and the second pulley respectively. The guide rail has a first end and a second end, the first pulley is disposed at the first end of the guide rail, and the second pulley is disposed at the second end of the guide rail. The first fixing seat is detachably disposed at the first end of the guide rail. The first fixing seat is rotatably mounted with the first pulley, and the first fixing seat defines an accommodating groove configured to movably accommodate the first pulley in the first direction. The second fixing seat is disposed at the second end of the guide rail, and the second fixing seat is rotatably mounted with the second pulley.

In one embodiment, two fitting portions are symmetrically disposed on two side walls of the accommodating groove which are oppositely disposed in a second direction, the two fitting portions each include a mounting slot and a clamping portion which are communicated with each other, and the second direction is perpendicular to the first direction; and the first pulley is provided with a connector, and the connector is fitted into the clamping portion along the mounting slot and rotatably mounted in the clamping portion.

In one embodiment, an opening of the mounting slot is located at an upper portion of the first fixing seat; or the opening of the mounting slot is located at a lower portion of the first fixing seat; or the opening of the mounting slot is located on one side of the first fixing seat opposite to the second fixing seat.

In one embodiment, an anti-detachment portion is disposed at an edge of the clamping portion.

In one embodiment, the guide rail includes a guide portion and a fixing portion connected to the guide portion, the guide portion includes a first guide sub-portion configured to guide a curtain fabric and a second guide sub-portion configured to guide a slider, and the fixing portion is disposed on an outer side of the guide portion and connected to one side of the second guide sub-portion facing away from the first guide sub-portion.

In one embodiment, the first fixing seat includes a stop portion, the stop portion is provided with a first stop member, and the first stop member is embedded and fixed to one end of the second guide sub-portion.

In one embodiment, the first fixing seat further includes a fixing connection portion connected to the stop portion, and the fixing connection portion is fixed to the fixing portion and located on the outer side of the guide portion.

In one embodiment, a support base is disposed between the first fixing seat and the second fixing seat in the first direction, the support base is provided with a support member, and the support member is disposed below the synchronous belt and configured to support the synchronous belt.

In one embodiment, the support base is provided with a second stop member, and the second stop member is embedded and fixed to another end of the second guide sub-portion.

In one embodiment, both the first pulley and the second pulley are gears, the synchronous belt is provided with a plurality of convex teeth matched with the gears on an inner surface of the synchronous belt, and the gears are meshed with the convex teeth.

On the basis of the above transmission mechanism, the present disclosure further provides a sunroof assembly. The sunroof assembly includes glass, a winding member, a curtain fabric, and a driving mechanism. The winding member is fixed to the glass, and the winding member has an axis extending in a second direction. Two above transmission mechanisms are respectively disposed at two ends of the winding member in the second direction. The curtain fabric has a first side and a second side which are spaced apart from each other in the first direction, and the first side is fixed to the winding member. The driving mechanism is connected to the first pulley and/or the second pulley.

In one embodiment, the sunroof assembly further includes a pulling member. The pulling member is opposite to and spaced apart from the winding member, the second side of the curtain fabric is fixed to the pulling member, and the pulling member is slidably mounted in the guide portion in the first direction.

In one embodiment, the sunroof assembly further includes a slider. The slider includes a mounting portion, a sliding portion, and a connecting portion which are connected in sequence, the mounting portion is fixed to the pulling member, the sliding portion is slidably mounted in the second guide sub-portion, and the connecting portion is fixed to the synchronous belt.

In one embodiment, the sunroof assembly further includes a first support rod or a second support rod. The first support rod is configured to support the guide rail, and two ends of the first support rod are respectively located at first ends of two guide rails. The second support rod is configured to support the curtain fabric, and two ends of the second support rod are respectively located at second ends of the two guide rails.

Compared with the related art, the present disclosure has the following beneficial effects.
(1) By defining the accommodating groove on the first fixing seat configured to movably accommodate the first pulley in the first direction, the first pulley can be easily installed and disassembled, thereby facilitating adjustment of a tension of the synchronous belt, improving the transmission precision of the synchronous belt, and further improving the operation stability of the curtain fabric.
(2) By providing the connector on the first pulley and the fitting portion including the mounting slot and the clamping portion communicated with each other on the first fixing seat, the connector is fitted into the clamping portion along the mounting slot and rotatably mounted in the clamping portion, which further improves the convenience of disassembly and assembly of the first pulley.
(3) By providing the anti-detachment portion at the edge of the clamping portion, the first pulley remains stable during rotation and is prevented from falling off.
(4) A flexible shaft transmission in the related art is replaced with synchronous belt transmission to achieve a noise reduction effect; meanwhile, the number of components is reduced, and the production cost is lowered.

### BRIEF DESCRIPTION OF THE DRAWINGS

FIG. 1 is a partially enlarged schematic structural view of a transmission mechanism in the prior art.
FIG. 2 is a schematic structural view of a sunroof assembly in an embodiment of the present disclosure.
FIG. 3 is a partially enlarged schematic structural view of a transmission mechanism in an embodiment of the present disclosure.
FIG. 4 is a partially enlarged schematic structural view of a transmission mechanism in another embodiment of the present disclosure.
FIG. 5 is an enlarged schematic cross-sectional view of FIG. 2, taken along line D-D.
FIG. 6 is an enlarged schematic cross-sectional view of FIG. 2, taken along line A-A.
FIG. 7 is a rear view of FIG. 3.
FIG. 8 is an enlarged exploded view of a support base and a guide rail in an embodiment of the present disclosure.
FIG. 9 is an enlarged schematic view illustrating connection between a slider and a synchronous belt in an embodiment of the present disclosure.

### Description of Reference Signs:

10, transmission mechanism;
11, transmission wheel; 111, first pulley; 112, second pulley;
12, synchronous belt; 121, convex tooth;
13, first fixing seat; 131, accommodating groove; 1311, side wall; 132, mounting slot; 1321, opening; 133, clamping portion; 134, anti-detachment portion; 135, stop portion; 1351, first stop member; 136, fixing connection portion;
14, second fixing seat;
15, connector;
16, guide rail; 161, first end; 162, second end; 163, guide portion; 1631, first guide sub-portion; 1632, second guide sub-portion; 164, fixing portion;
17, support base; 171, support member; 172, second stop member;
20, sunroof assembly;
21, glass;
22, winding member;
23, curtain fabric;
24, driving mechanism;
25, pulling member;
26, slider; 261, mounting portion; 262, sliding portion; 263, connecting portion;
27, first support rod;
28, second support rod;
B, first direction;
C, second direction;
L, axis.

### DETAILED DESCRIPTION

To make the above objects, features, and advantages of the present disclosure more obvious and understandable, specific embodiments of the present disclosure will be described in detail below with reference to accompanying drawings. Many specific details are set forth in the following description for a full understanding of the present disclosure. However, the present disclosure can be implemented in many other ways different from those described herein, and those skilled in the art can make similar improvements without departing from the connotation of the present disclosure, so the present disclosure is not limited to the specific embodiments disclosed below.

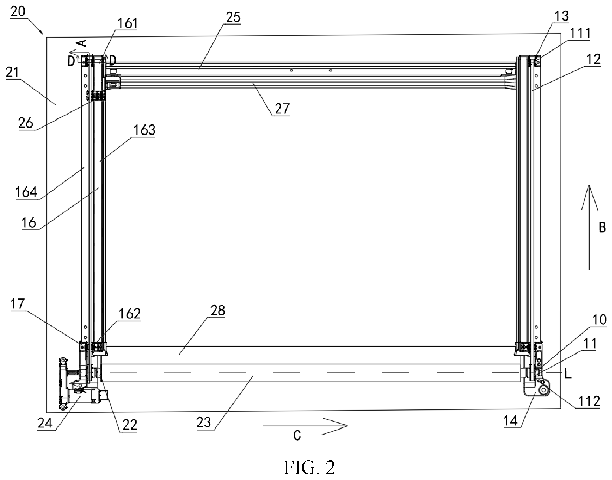

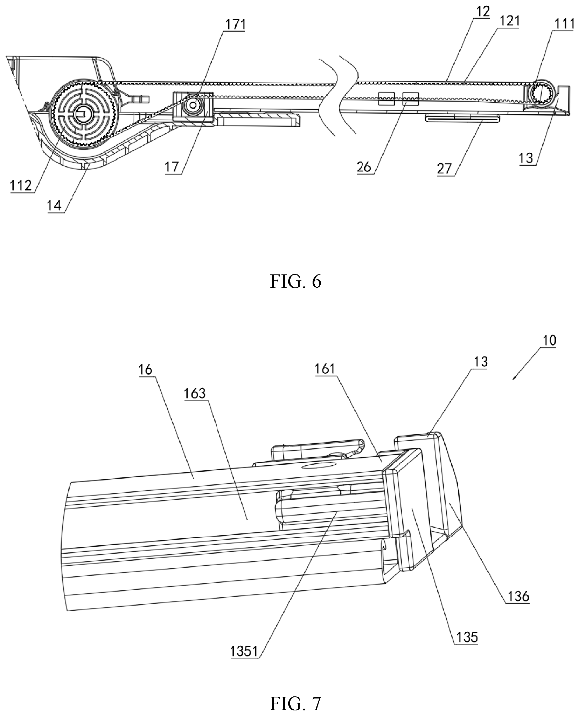

First, reference is made to FIGS. 2 and 6, some embodiments of the present disclosure provide a transmission mechanism 10. The transmission mechanism 10 includes a transmission wheel 11, a synchronous belt 12, a guide rail 16, a first fixing seat 13, and a second fixing seat 14. The transmission wheel 11 includes a first pulley 111 and a second pulley 112 which are spaced apart from each other in a first direction B. The synchronous belt 12 is disposed between the first pulley 111 and the second pulley 112, and the synchronous belt 12 is in transmission fit with the first pulley 111 and the second pulley 112 respectively. The guide rail 16 has a first end 161 and a second end 162. The first pulley 111 is disposed at the first end 161 of the guide rail 16, and the second pulley 112 is disposed at the second end 162 of the guide rail 16. The first fixing seat 13 is detachably disposed at the first end 161 of the guide rail 16. The first fixing seat 13 is rotatably mounted with the first pulley 111, and the first fixing seat 13 defines an accommodating groove 131 configured to movably accommodate the first pulley 111 in the first direction B. The second fixing seat 14 is disposed at the second end 162 of the guide rail 16. The second fixing seat 14 is rotatably mounted with the second pulley 112.

It can be noted that, in this embodiment, by defining the accommodating groove 131 in the first fixing seat 13, the first pulley 111 can move in the first direction B, which facilitates installation and disassembly of the first pulley 111, thereby facilitating adjustment of tension of the synchronous belt 12 and improving transmission precision of the synchronous belt 12. In addition, flexible shaft transmission in the related art is replaced with the synchronous belt 12 for transmission to achieve a noise reduction effect, meanwhile, the number of components is reduced, and the production cost is lowered.

It can be noted that, in this embodiment, the synchronous belt 12 may be an open belt or a cross belt. The open belt is a straight belt with two unconnected ends, and the cross belt is an annular belt formed by connecting two ends of the open belt. Preferably, the synchronous belt 12 is a cross belt. Compared with the open belt, the cross belt has characteristics of higher transmission precision, better stability, longer service life and the like, and the cross belt is adopted to further improve the overall stability of the transmission mechanism 10.

It can be noted that, in this embodiment, the material of the guide rail 16 is not limited, and is generally plastic or metal.

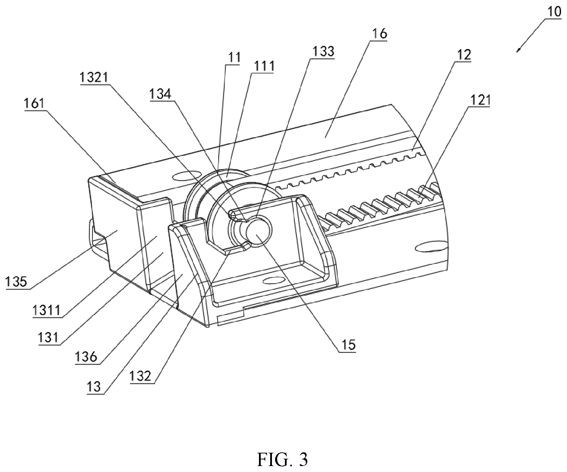

In one embodiment, as illustrated in FIGS. 3 to 5, two fitting portions are symmetrically disposed on two side walls 1311 of the accommodating groove 131 which are oppositely disposed in a second direction C. The fitting portions each include a mounting slot 132 and a clamping portion 133 which are communicated with each other. The second direction C is perpendicular to the first direction B. The first pulley 111 is provided with a connector 15, and the connector 15 is fitted into the clamping portion 133 along the mounting slot 132 and rotatably mounted in the clamping portion 133.

It can be noted that, in this embodiment, the connector 15 is disposed on the first pulley 111, two fitting portions each including the mounting slot 132 and the clamping portion 133 which are communicated with each other are disposed on the two side walls 1311 of the accommodating groove 131 of the first fixing seat 13 which are oppositely disposed in the second direction C, then the connector 15 is fitted into the clamping portion 133 along the mounting slot 132, and the connector 15 is rotatably mounted in the clamping portion 133 after installation, in this way, convenience of disassembly and assembly of the first pulley 111 is further improved, thereby facilitating adjustment of the tension of the synchronous belt 12 more conveniently and improving transmission precision of the synchronous belt 12.

It can be noted that, in this embodiment, the connector 15 and the first pulley 111 may be integrally injection-molded, or may be post-installed and fixed by means of clamping, bonding, or the like. Preferably, the connector 15 and the first pulley 111 are integrally injection-molded, in this case, the connector 15 and the first pulley 111 become an integral part, which reduces the number of components and simplifies the installation process.

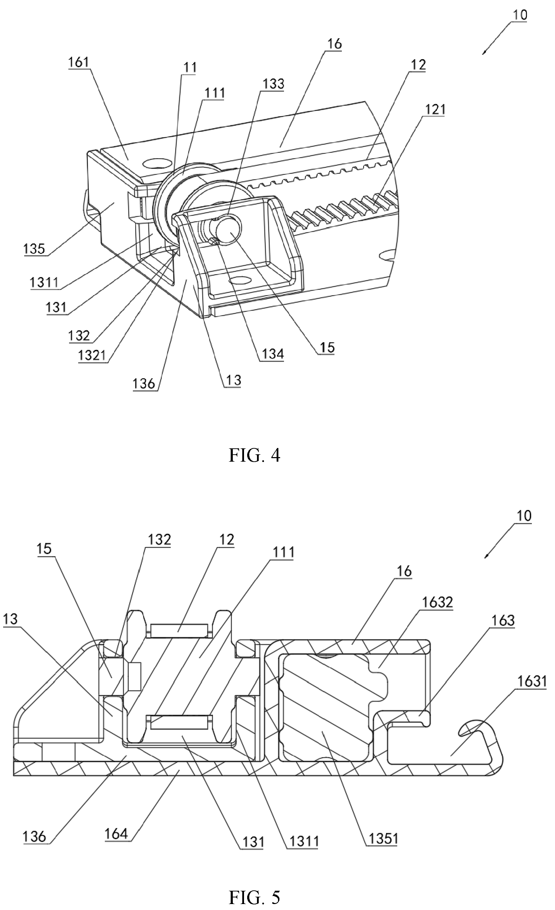

In this embodiment, further, as illustrated in FIG. 3 and FIG. 4, an anti-detachment portion 134 is disposed at an edge of the clamping portion 133.

It can be noted that, in this embodiment, by providing the anti-detachment portion 134 at the edge of the clamping portion 133, anti-detachment portion 134 cooperates with the clamping portion 133 to keep the connector 15 stable during rotation, thereby keeping the first pulley 111 stable during rotation and preventing the first pulley 111 from falling off from the first fixing seat 13.

In one embodiment, an opening 1321 of the mounting slot 132 is located at an upper portion of the first fixing seat 13 (as illustrated in FIG. 3); or an opening 1321 of the mounting slot 132 is located at a lower portion the first fixing seat 13 (not illustrated in the figure); or an opening 1321 of the mounting slot 132 is located on one side of the first fixing seat 13 opposite to the second fixing seat 14 (as illustrated in FIG. 4).

It can be noted that, in this embodiment, the first pulley 111 and the connector 15 are both installed or detached from the opening 1321, which simplifies an installation process of the first pulley 111 and the first fixing seat 13.

It can be noted that, compared with a case that the opening 1321 of the mounting slot 132 is located at the upper portion or at the lower portion of the first fixing seat 13, the scheme that the opening 1321 of the mounting slot 132 is located on one side of the first fixing seat 13 opposite to the second fixing seat 14 is more preferred, for the following reasons. When the opening 1321 of the mounting slot 132 is located on one side of the first fixing seat 13 opposite to the second fixing seat 14, the connector 15 can be directly fitted into the clamping portion 133 in the first direction B without reserving a space for assembly and disassembly of the connector 15, thus reducing a space occupied by the first fixing seat 13 in a vehicle length direction.

In one embodiment, as illustrated in FIG. 5, the guide rail 16 includes a guide portion 163 and a fixing portion 164 connected to the guide portion 163. The guide portion 163 includes a first guide sub-portion 1631 configured to guide a curtain fabric 23 and a second guide sub-portion 1632 configured to guide a slider 26, and the fixing portion 164 is disposed on an outer side of the guide portion 163 and connected to one side of the second guide sub-portion 1632 facing away from the first guide sub-portion 1631.

In one embodiment, as illustrated in FIG. 7, the first fixing seat 13 includes a stop portion 135, the stop portion 135 is provided with a first stop member 1351, and the first stop member 1351 is embedded and fixed to one end of the second guide sub-portion 1632.

It can be noted that, in this embodiment, the first stop member 1351 is disposed on the first fixing seat 13, and the first stop member 1351 is embedded and fixed to one end of the second guide sub-portion 1632, which prevents the slider 26 from sliding out from one end of the second guide sub-portion 1632 to cause transmission failure and further lead to movement failure of the curtain fabric 23.

In this embodiment, further, the first fixing seat 13 further includes a fixing connection portion 136 connected to the stop portion 135, and the fixing connection portion 136 is fixed to the fixing portion 164 and located on the outer side of the guide portion 163.

In one embodiment, as illustrated in FIGS. 2, 6, and 8, a support base 17 is disposed between the first fixing seat 13 and the second fixing seat 14 in the first direction B, the support base 17 is provided with a support member 171, and the support member 171 is disposed below the synchronous belt 12 and configured to support the synchronous belt 12.

It can be noted that, in this embodiment, the support member 171 is configured to support the synchronous belt 12 and tension the synchronous belt 12 to prevent the synchronous belt 12 from sagging and causing failure of the transmission mechanism 10.

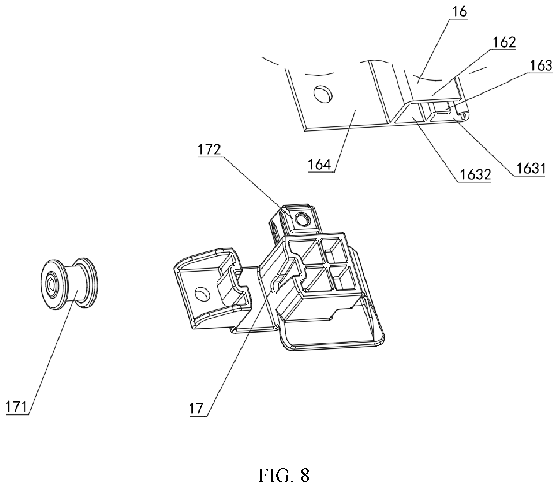

In one embodiment, as illustrated in FIG. 8, the support base 17 is provided with a second stop member 172, and the second stop member 172 is embedded and fixed to the other end of the second guide sub-portion 1632.

It can be noted that, in this embodiment, the second stop member 172 is disposed on the support base 17, the second stop member 172 is embedded and fixed to the other end of the second guide sub-portion 1632, which prevents the slider 26 from sliding out from the other end of the second guide sub-portion 1632, thereby avoiding transmission failure and consequent movement failure of the curtain fabric 23.

In one embodiment, as illustrated in FIG. 6, both the first pulley 111 and the second pulley 112 are gears, the synchronous belt 12 is provided with multiple convex teeth 121 matched with the gears on an inner surface of the synchronous belt 12, and the gears are meshed with the convex teeth 121.

It can be noted that, in this embodiment, the connection between the synchronous belt 12 and the first pulley 111 and between the synchronous belt 12 and the second pulley 112 is realized through the meshing of the gears and the convex teeth 121.

It can be noted that, in one embodiment, a disassembly and installation process of the transmission mechanism 10 is as follows.

Installation: after the synchronous belt 12 is installed and meshed with the first pulley 111, the connector 15 is fixed with the first pulley 111, and the connector 15 is fitted into the clamping portion 133 along the mounting slot 132, so that the first pulley 111 is rotatably fixed to the first fixing seat 13. Then, the first fixing seat 13 is connected to the guide rail 16 through bolt locking or other modes. Finally, the synchronous belt 12 is installed and meshed with the second pulley 112 to complete the installation.

Disassembly: after loosening the synchronous belt 12, the connector 15 is moved out of the clamping portion 133, and then tooth grooves where the synchronous belt 12 is meshed with the first pulley 111 and the tooth grooves where the synchronous belt 12 is meshed with the second pulley 112 are loosened to complete the disassembly.

On the basis of the above transmission mechanism 10, as illustrated in FIG. 2, the present disclosure further provides a sunroof assembly 20. The sunroof assembly 20 includes glass 21, a winding member 22, a curtain fabric 23, and a driving mechanism 24. The winding member 22 is fixed to the glass 21, and the winding member 22 has an axis L extending in the second direction C. Two transmission mechanisms 10 as described above are respectively disposed at two ends of the winding member 22 in the second direction C. The curtain fabric 23 has a first side (not illustrated in the figure) and a second side (not illustrated in the figure) which are spaced apart from each other in the first direction B, where the first side (not illustrate in the figure) is fixed to the winding member 22. The driving mechanism 24 is connected to the first pulley 111 and/or the second pulley 112.

It can be noted that, in this embodiment, by defining the accommodating groove 131 in the first fixing seat 13, the first pulley 111 can move in the first direction B, which facilitates installation and disassembly of the first pulley 111, thereby facilitating adjustment of tension of the synchronous belt 12 and improving transmission precision of the synchronous belt 12, and further improving operation stability of the curtain fabric 23. Secondly, the connector 15 is disposed on the first pulley 111, two fitting portions each including the mounting slot 132 and the clamping portion 133 which are communicated with each other are disposed on the two side walls 1311 of the accommodating groove 131 of the first fixing seat 13 which are oppositely disposed in the second direction C, then the connector 15 is fitted into the clamping portion 133 along the mounting slot 132, and the connector 15 is rotatably mounted in the clamping portion 133 after installation, in this way, convenience of disassembly and assembly of the first pulley 111 is further improved, thereby facilitating adjustment of the tension of the synchronous belt 12 more conveniently and improving transmission precision of the synchronous belt 12. Thirdly, by providing the anti-detachment portion 134 at the edge of the clamping portion 133, anti-detachment portion 134 cooperates with the clamping portion 133 to keep the connector 15 stable during rotation, thereby keeping the first pulley 111 stable during rotation and preventing the first pulley 111 from falling off from the first fixing seat 13. Finally, the flexible shaft transmission in the related art is replaced with the synchronous belt 12 for transmission to achieve a noise reduction effect; meanwhile, the number of components is reduced, and the production cost is lowered.

It can be noted that, in this embodiment, the material of the glass 21 is not limited, and is usually inorganic glass, organic glass, or a composite material. The material of the curtain fabric 23 is not limited, and can be cloth, plastic and the like, and the curtain fabric 23 can be used for sunshade or projection.

It can be noted that, in this embodiment, a spring (not illustrated in the figure) is disposed in the winding member 22. One end of the spring is connected to the second pulley 112, and the spring is a spiral spring or a torsion spring. The spring is pre-twisted before being installed into the winding member 22, and the winding force generated by the pre-twisted spring can tension the curtain fabric 23, ensure that the curtain fabric 23 is always in a tensioned state during the opening or closing process, avoid sagging, and also prevent wrinkles formation. In addition, since the winding force generated by the pre-twisted spring can expand the spring, the spring needs to be in a stretched state in the winding member 22, so that the tensile force can counteract the winding force for convenient installation. A restoring force is generated after the spring is stretched, since the second pulley 112 is directly connected to the spring, the restoring force of the spring pulls the second pulley 112 towards the winding member 22, and the tensile force subject to the second pulley 112 is transmitted to the first pulley 111 through the synchronous belt 12, which further improves an anti-detachment capability of the first pulley 111 and prevents the first pulley 111 from falling off from the first fixing seat 13.

It can be noted that, in this embodiment, the driving mechanism 24 being connected to the first pulley 111 and/or the second pulley 112 means that: the driving mechanism 24 can drive only the first pulley 111 to rotate, drive only the second pulley 112 to rotate, and drive the first pulley 111 and the second pulley 112 to rotate at the same time. The number of the driving mechanisms 24 is not limited herein, and can be one or more.

In one embodiment, as illustrated in FIG. 2, the sunroof assembly 20 further includes a pulling member 25, the pulling member 25 is opposite to and spaced apart from the winding member 22, the second side (not illustrated in the figure) of the curtain fabric 23 is fixed to the pulling member 25; and the pulling member 25 is slidably mounted in the guide portion 163 in the first direction B. The arrangement of the pulling member 25 makes the curtain fabric 23 run more smoothly during the opening or closing process.

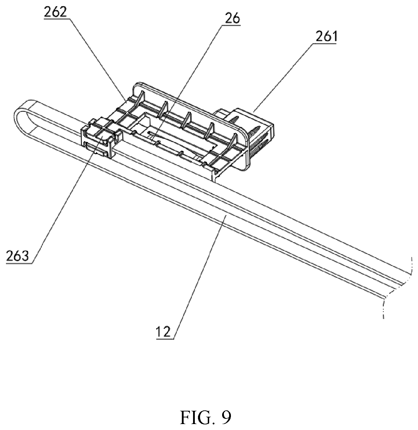

In one embodiment, as illustrated in FIGS. 2, 6 and 9, the sunroof assembly 20 further includes a slider 26, the slider 26 includes a mounting portion 261, a sliding portion 262, and a connecting portion 263 which are connected in sequence, the mounting portion 261 is fixed to the pulling member 25, the sliding portion 262 is slidably mounted in the second guide sub-portion 1632, and the connecting portion 263 is fixed to the synchronous belt 12.

It can be noted that, in this embodiment, a fixing mode of the connecting portion 263 of the slider 26 and the synchronous belt 12 is not limited herein, and can be clamping, locking, bonding and other modes.

It can be noted that, in this embodiment, the synchronous belt 12 connects the first pulley 111, the second pulley 112, and the slider 26 in a closed loop, the driving mechanism 24 drives the first pulley 111 and/or the second pulley 112 to further drive the synchronous belt 12 to rotate. Since the connecting portion 263 of the slider 26 is fixed to the synchronous belt 12, the synchronous belt 12 drives the connecting portion 263 to move, thereby driving the pulling member 25 to move, realizing opening or closing of the curtain fabric 23, and ensuring the operation stability of the curtain fabric 23.

In one embodiment, as illustrated in FIG. 2, the sunroof assembly 20 further includes a first support rod 27 configured to support the guide rail 16, and two ends of the first support rod 27 are respectively located at first ends 161 of the two guide rails 16. The first support rod 27 is configured to support the guide rail 16 and improving the stability of the guide rail 16.

In one embodiment, as illustrated in FIG. 2, the sunroof assembly 20 further includes a second support rod 28 configured to support the curtain fabric 23, and two ends of the second support rod 28 are respectively located at second ends 162 of the two guide rails 16. The second support rod 28 is configured to support the curtain fabric 23, thus avoiding sagging of the curtain fabric 23.

In one embodiment of the present disclosure, a working principle of the sunroof assembly 20 is as follows. When the curtain fabric 23 needs to be unfolded, the driving mechanism 24 drives the first pulley 111 and/or the second pulley 112 to rotate, the first pulley 111 and/or the second pulley 112 drive the synchronous belt 12 to rotate. Since the connecting portion 263 of the slider 26 is fixed to the synchronous belt 12, the synchronous belt 12 drives the slider 26 to move, thereby driving the pulling member 25 to move, realizing the unfolding of the curtain fabric 23. On the contrary, when the curtain fabric 23 needs to be closed, the driving mechanism 24 drives the first pulley 111 and/or the second pulley 112 to rotate in a reverse direction, thereby realizing closing of the curtain fabric 23.

It can be noted that, in the present disclosure, the glass 21 may be inorganic glass, for example, soda-lime glass (also known as soda-lime silicate glass), aluminosilicate glass, borate glass, borosilicate glass, lithium aluminosilicate glass, alkali-free glass, quartz glass and the like. Among the above types, soda-lime glass is particularly preferred. From the perspective of improving strength, the inorganic glass can also be tempered glass, which may be either chemically tempered glass or physically tempered glass.

The glass 21 may also be organic glass (resin), for example, polycarbonate resin, polystyrene resin, aromatic polyester resin, acrylic resin, polyester resin, polyarylate resin, a condensate of halogenated bisphenol A and ethylene glycol, acrylic urethane resin, an acrylic resin containing a halogenated aryl group and the like. Among them, polycarbonate resins such as aromatic polycarbonate resins and acrylic resins such as polymethyl methacrylate resins are preferred, polycarbonate resins are more preferred, and bisphenol A-based polycarbonate resins are particularly preferred. In addition, two or more of the above resins can also be used in combination.

The various technical features of the above embodiments can be combined arbitrarily. For the sake of concise description, all possible combinations of the various technical features in the above embodiments are not exhaustively described. However, any combination of these technical features that is free of contradiction shall be deemed to fall within the scope recorded in this specification.

The above embodiments only express several embodiments of the present disclosure, and the description thereof is relatively specific and detailed, but it shall not be construed as a limitation on the scope of the present disclosure. It should be pointed out that, for those skilled in the art, several modifications and improvements can be made without departing from the concept of the present disclosure, and these all fall within the protection scope of the present disclosure. Therefore, the protection scope of the present disclosure shall be subject to the appended claims.

In addition, the terms "first" and "second" are only used for descriptive purposes, and cannot be understood as indicating or implying relative importance or implicitly indicating the number of indicated technical features. Thus, the features defined with "first" and "second" may explicitly or implicitly include at least one of the features. In the description of the present disclosure, the meaning of "a plurality of" or "multiple" is at least two, such as two, three and the like, unless otherwise clearly and specifically defined.

In the present disclosure, unless otherwise clearly specified and limited, the terms "installation", "connection", "coupled", "fixation", and the like shall be understood in a broad sense, for example, it can be a fixed connection, a detachable connection (such as connection by bolts or screws), or an integral formation (such as riveting, welding); it can be a mechanical connection or an electrical connection; it can be a direct connection or an indirect connection through an intermediate medium, and it can be an internal communication between two elements or an interaction relationship between two elements, unless otherwise clearly defined. For those skilled in the art, specific meanings of the above terms in the present disclosure can be understood according to specific situations.

In addition, the terms used for expressing position relationship or shape in any technical scheme disclosed in the present disclosure include states or shapes approximate, similar or close to them unless otherwise stated.

Any component provided by the present disclosure can be either assembled from multiple separate components or a single component manufactured by an integral forming process.

In the present disclosure, unless otherwise clearly specified and limited, a first feature being "on" or "under" a second feature may mean that the first and second features are in direct contact, or the first and second features are in indirect contact through an intermediate medium. The terms "vertical", "horizontal", "upper", "lower", "left", "right" and similar expressions used herein are only for descriptive purposes and do not represent the only implementation.

## Claims

1. A transmission mechanism, comprising:
a transmission wheel, comprising a first pulley and a second pulley which are spaced apart from each other in a first direction;
a synchronous belt, disposed between the first pulley and the second pulley, wherein the synchronous belt is in transmission fit with the first pulley and the second pulley respectively;
a guide rail, having a first end and a second end, wherein the first pulley is disposed at the first end of the guide rail, and the second pulley is disposed at the second end of the guide rail;
a first fixing seat, detachably disposed at the first end of the guide rail, wherein the first fixing seat is rotatably mounted with the first pulley, and the first fixing seat defines an accommodating groove configured to movably accommodate the first pulley in the first direction; and
a second fixing seat, disposed at the second end of the guide rail, wherein the second fixing seat is rotatably mounted with the second pulley.

2. The transmission mechanism of claim 1, wherein two fitting portions are symmetrically disposed on two side walls of the accommodating groove which are oppositely disposed in a second direction, the two fitting portions each comprise a mounting slot and a clamping portion which are communicated with each other, and the second direction is perpendicular to the first direction; and the first pulley is provided with a connector, and the connector is fitted into the clamping portion along the mounting slot and rotatably mounted in the clamping portion.

3. The transmission mechanism of claim 2, wherein an opening of the mounting slot is located at an upper portion of the first fixing seat; or the opening of the mounting slot is located at a lower portion of the first fixing seat; or the opening of the mounting slot is located on one side of the first fixing seat opposite to the second fixing seat.

4. The transmission mechanism of claim 3, wherein an anti-detachment portion is disposed at an edge of the clamping portion.

5. The transmission mechanism of claim 1, wherein the guide rail comprises a guide portion and a fixing portion connected to the guide portion, the guide portion comprises a first guide sub-portion configured to guide a curtain fabric and a second guide sub-portion configured to guide a slider, and the fixing portion is disposed on an outer side of the guide portion and connected to one side of the second guide sub-portion facing away from the first guide sub-portion.

6. The transmission mechanism of claim 5, wherein the first fixing seat comprises a stop portion, the stop portion is provided with a first stop member, and the first stop member is embedded and fixed to one end of the second guide sub-portion.

7. The transmission mechanism of claim 6, wherein the first fixing seat further comprises a fixing connection portion connected to the stop portion, and the fixing connection portion is fixed to the fixing portion and located on the outer side of the guide portion.

8. The transmission mechanism of claim 7, wherein a support base is disposed between the first fixing seat and the second fixing seat in the first direction, the support base is provided with a support member, and the support member is disposed below the synchronous belt and configured to support the synchronous belt.

9. The transmission mechanism of claim 8, wherein the support base is provided with a second stop member, and the second stop member is embedded and fixed to another end of the second guide sub-portion.

10. The transmission mechanism of claim 1, wherein both the first pulley and the second pulley are gears, the synchronous belt is provided with a plurality of convex teeth matched with the gears on an inner surface of the synchronous belt, and the gears are meshed with the convex teeth.

11. A sunroof assembly, comprising:
glass;
a winding member, fixed to the glass, the winding member having an axis extending in a second direction; wherein two transmission mechanisms of any one of claims 1 to 10 are respectively disposed at two ends of the winding member in the second direction;
a curtain fabric, having a first side and a second side which are spaced apart from each other in the first direction, the first side being fixed to the winding member; and
a driving mechanism, connected to the first pulley and/or the second pulley.

12. The sunroof assembly of claim 11, further comprising:
a pulling member, wherein the pulling member is opposite to and spaced apart from the winding member, the second side of the curtain fabric is fixed to the pulling member, and the pulling member is slidably mounted in the guide portion in the first direction.

13. The sunroof assembly of claim 12, further comprising:
a slider, wherein the slider comprises a mounting portion, a sliding portion, and a connecting portion which are connected in sequence, the mounting portion is fixed to the pulling member, the sliding portion is slidably mounted in the second guide sub-portion, and the connecting portion is fixed to the synchronous belt.

14. The sunroof assembly of claim 11, further comprising:
a first support rod configured to support the guide rail, and two ends of the first support rod are respectively located at first ends of two guide rails; or
a second support rod configured to support the curtain fabric, and two ends of the second support rod are respectively located at second ends of the two guide rails.
